# EUROPEAN PATENT APPLICATION

(11) **EP 4 585 481 A2**
(43) Date of publication of application: **16.07.2025**
(21) Application number: 25176458.5
(22) Date of filing: 14.05.2025
(51) Int. Cl.: B60W 30/18, B60W 60/00

(54) **INTELLIGENT DRIVING VEHICLE CONTROL METHOD AND APPARATUS, STORAGE MEDIUM, AND ELECTRONIC DEVICE**

(30) Priority: 15.05.2024 CN 202410605303
(71) Applicant: Beijing Horizon Information Technology Co., Ltd., Beijing 100094 (CN)
(72) Inventor: Kong, Yiting, Beijing, 100094 (CN); Song, Wei, Beijing, 100094 (CN)
(74) Representative: Patentanwälte Magenbauer & Kollegen Partnerschaft mbB

(57) **Abstract**

Disclosed are an intelligent driving vehicle control method and apparatus, a storage medium, and an electronic device. The method includes: obtaining a driving mode of the intelligent driving vehicle at a current moment and current driving environment information; in response to that the driving mode of the intelligent driving vehicle at the current moment is an intersection mode, obtaining traffic-flow historical trajectory information corresponding to a current road segment on which the intelligent driving vehicle is driving; determining a target driving trajectory based on the traffic-flow historical trajectory information and the current driving environment information; and controlling the intelligent driving vehicle to drive based on the target driving trajectory. This method is applicable to generating target driving trajectories suitable for the intelligent driving vehicle in various intersections and scenarios without targets for tracking.

## Description

### TECHNICAL FIELD

This disclosure relates to the technical field of intelligent driving, and in particular, to an intelligent driving vehicle control method and apparatus, a storage medium, and an electronic device.

### BACKGROUND

With rapid development of intelligent driving technologies, intelligent driving systems can be applied to increasingly more scenarios, among which an intersection is one of typical scenarios. In related technologies, there are mainly three modes for an intelligent driving vehicle (a vehicle for short) to pass through an intersection: A first mode is to extend a lane line. For irregular intersections such as an intersection with staggered lane lines or a curved intersection, an extension direction of the lane line may be incorrect, causing the vehicle to drive in a wrong lane. The second mode is to drive following a preceding vehicle. However, at the intersection, the preceding vehicle is prone to getting lost, and this mode is not suitable for situations where there are no preceding vehicles (in this case, the ego vehicle is a first vehicle in a current lane). The third mode is a pure visual transportation mode based on high-precision map navigation and high-resolution images collected in a real-time manner for path planning. However, this mode is difficult to be widely applied due to high costs in collecting high-precision maps and significant impact from actual environments (such as light and irregular intersections) on the high-resolution images collected in a real-time manner. How to control the intelligent driving vehicle to pass through the intersection correctly and quickly has become one of technical problems that urgently need to be resolved by the intelligent driving system.

### SUMMARY

To resolve the foregoing technical problem, this disclose provides an intelligent driving vehicle control method and apparatus, a storage medium, and an electronic device, so that the intelligent driving vehicle can pass through an intersection autonomously, correctly, and quickly.

According to an embodiment in a first aspect of this disclosure, an intelligent driving vehicle control method is provided, including:
obtaining a driving mode of the intelligent driving vehicle at a current moment and current driving environment information;
in response to that the driving mode of the intelligent driving vehicle at the current moment is an intersection mode, obtaining traffic-flow historical trajectory information corresponding to a current road segment on which the intelligent driving vehicle is driving;
determining a target driving trajectory based on the traffic-flow historical trajectory information and the current driving environment information; and
controlling the intelligent driving vehicle to drive based on the target driving trajectory.

According to an embodiment in a second aspect of this disclosure, an intelligent driving vehicle control apparatus is provided, including:
a first obtaining module, configured to obtain a driving mode of the intelligent driving vehicle at a current moment and current driving environment information;
a second obtaining module, configured to obtain traffic-flow historical trajectory information corresponding to a current road segment on which the intelligent driving vehicle is driving in response to that the driving mode of the intelligent driving vehicle at the current moment is an intersection mode;
a determining module, configured to determine a target driving trajectory based on the traffic-flow historical trajectory information and the current driving environment information; and
a control module, configured to control the intelligent driving vehicle to drive based on the target driving trajectory.

According to an embodiment in a third aspect of this disclosure, a computer readable storage medium is provided. The storage medium stores a computer program, and the computer program is used for implementing the intelligent driving vehicle control method provided in the embodiment in the first aspect of this disclosure.

According to an embodiment in a fourth aspect of this disclosure, an electronic device is provided. The electronic device includes:
a processor; and
a memory, configured to store processor-executable instructions, where
the processor is configured to read the instructions from the memory, and execute the instructions to implement the intelligent driving vehicle control method provided in the embodiment in the first aspect of this disclosure.

According to an embodiment in a fifth aspect of this disclosure, a computer program product is provided. When instructions in the computer program product are executed by a processor, the intelligent driving vehicle control method provided in the embodiment in the first aspect of this disclosure is implemented.

The intelligent driving vehicle control method provided in the embodiments of this disclosure is applicable to the intelligent driving vehicle provided with the intersection mode. When passing through an intersection section, the intelligent driving vehicle switches to the intersection mode for driving. During a driving process of the intelligent driving vehicle, the driving mode at the current moment of the ego vehicle and the current driving environment information are obtained. If the driving mode of the ego vehicle is the intersection mode, traffic-flow historical trajectory information of other vehicles in the intersection section that is currently driven is obtained. The target driving trajectory suitable for the ego vehicle is determined based on the traffic-flow historical trajectory information of the other vehicles and the current driving environment information. Finally, the ego vehicle is controlled to drive based on the target driving trajectory, so as to pass through the current intersection section. Whether at regular or irregular intersections, and regardless of whether the ego vehicle is a first vehicle, the target driving trajectory that is suitable for the ego vehicle can be generated according to this method. In this way, the vehicle passes through the intersection correctly and quickly without relying on high-resolution images or increasing costs, thereby ensuring safe driving of the vehicle.

### BRIEF DESCRIPTION OF DRAWINGS

FIG. 1 is a schematic diagram of a scenario in which an intelligent driving vehicle passes through an intersection according to an exemplary embodiment of this disclosure;
FIG. 2 is a schematic diagram of a scenario in which an intelligent driving vehicle passes through an intersection according to another exemplary embodiment of this disclosure;
FIG. 3 is a schematic diagram of a scenario in which an intelligent driving vehicle passes through an intersection according to still another exemplary embodiment of this disclosure;
FIG. 4 is a schematic flowchart of an intelligent driving vehicle control method according to an exemplary embodiment of this disclosure;
FIG. 5 is a schematic flowchart of an intelligent driving vehicle control method according to another exemplary embodiment of this disclosure;
FIG. 6 is a schematic flowchart of an intelligent driving vehicle control method according to still another exemplary embodiment of this disclosure;
FIG. 7 is a schematic flowchart of an intelligent driving vehicle control method according to yet another exemplary embodiment of this disclosure;
FIG. 8 is a schematic diagram illustrating that an intelligent driving vehicle passes through an intersection section according to an exemplary embodiment of this disclosure;
FIG. 9 is a schematic flowchart of an intelligent driving vehicle control method according to still yet another exemplary embodiment of this disclosure;
FIG. 10 is a schematic flowchart of an intelligent driving vehicle control method according to a further exemplary embodiment of this disclosure;
FIG. 11 is a schematic diagram illustrating that an intelligent driving vehicle passes through an intersection section according to another exemplary embodiment of this disclosure;
FIG. 12 is a schematic diagram of translated trajectory points obtained by translating trajectory points of each target object shown in FIG. 11;
FIG. 13 is a schematic flowchart of an intelligent driving vehicle control method according to a still further exemplary embodiment of this disclosure;
FIG. 14 is a schematic flowchart of an intelligent driving vehicle control method according to a yet further exemplary embodiment of this disclosure;
FIG. 15 is a schematic flowchart of a step of determining a driving mode at a current moment in an intelligent driving vehicle control method according to an exemplary embodiment of this disclosure;
FIG. 16 is a schematic flowchart of a step of determining traffic-flow historical trajectory information in an intelligent driving vehicle control method according to an exemplary embodiment of this disclosure;
FIG. 17 is a schematic flowchart of a step of determining a target driving trajectory in an intelligent driving vehicle control method according to an exemplary embodiment of this disclosure;
FIG. 18 is a schematic diagram of a compositional structure of an intelligent driving vehicle control apparatus according to an exemplary embodiment of this disclosure;
FIG. 19 is a schematic diagram of a compositional structure of an intelligent driving vehicle control apparatus according to another exemplary embodiment of this disclosure; and
FIG. 20 is a schematic diagram of a compositional structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

An intelligent driving system is an assisted driving system developed based on automatic control technologies. Through sensing and analyzing environment information surrounding an intelligent driving vehicle (which is referred to as a vehicle for short hereinafter), the intelligent driving system autonomously makes driving decisions to achieve automatic or semi-automatic driving of the vehicle.

Intersections are one of typical driving scenarios for the intelligent driving system. Currently, there are few schemes for the intelligent driving vehicle to achieve autonomous driving at the intersection, while in most cases, the intelligent driving vehicle needs to be taken over by a driver when driving at the intersection. There are the following three main modes for the vehicle that does not need to be taken over by the driver to pass through the intersection.

A first mode is a transportation manner of extending an existing lane line. This mode is limited to regular intersections only, such as standard intersections. For irregular intersections, such as an intersection with staggered lane lines or a curved intersection, a direction of a lane line extended based on a current lane line may be incorrect, which may easily guide the ego vehicle to drive into a wrong lane, and even lead to dangerous situations where the ego vehicle cuts in front of vehicles in other lanes and collides with roadsides. It may be learned that this driving scheme of passing through intersections is only applicable to regular intersections and is not applicable to irregular intersections.

A second mode is a transportation manner of driving following a preceding vehicle according to a driving trajectory of the preceding vehicle. According to this mode, due to complexity of an intersection road, the preceding vehicle is prone to getting lost. Moreover, when the ego vehicle is a first vehicle in a current lane, that is, there are no other vehicles on the current driving lane between the ego vehicle and the intersection, it is impossible to drive following the preceding vehicle because there are no preceding vehicles. It may be learned that this driving scheme of passing through intersections is only applicable to scenarios with a preceding vehicle and is not applicable to scenarios without a preceding vehicle.

A third mode is a pure visual transportation mode based on high-precision map navigation and high-resolution images collected in a real-time manner for path planning. This mode is difficult to be widely applied due to high costs in collecting high-precision maps and significant impact from actual environments (such as light and irregular intersections) on the high-resolution images collected in a real-time manner. For example, when a vehicle is driving at a large intersection or at night, a camera may difficult to accurately identify information about a target lane opposite the intersection. As a result, the vehicle cannot safely and correctly pass through the intersection.

To resolve shortcomings, such as few applicable scenarios, low accuracy, high costs, or significant impact from external environments, in schemes for vehicles to pass through intersections in existing intelligent driving technologies, embodiments of this disclosure provide an intelligent driving vehicle control method. In this method, an intersection mode is set for the vehicle. When passing through an intersection, the vehicle switches to the intersection mode for driving. Specifically: The vehicle obtains a driving mode at a current moment of the ego vehicle and current driving environment information. If the driving mode of the ego vehicle is the intersection mode, traffic-flow historical trajectory information of other vehicles in an intersection section that is currently driven is obtained. A target driving trajectory suitable for the ego vehicle is determined in combination with the traffic-flow historical trajectory information of the other vehicles and the current driving environment information. Finally, the ego vehicle is controlled to drive based on the target driving trajectory, so as to pass through the intersection that is currently driven. In this way, whether at regular or irregular intersections, and regardless of whether the ego vehicle is a first vehicle, the target driving trajectory suitable for the ego vehicle can be generated based on trajectories of other vehicles driving at this intersection section. Moreover, the vehicle can pass through the intersection correctly and quickly without relying on high-resolution images or increasing costs, thereby ensuring safe driving of the vehicle.

### Exemplary system

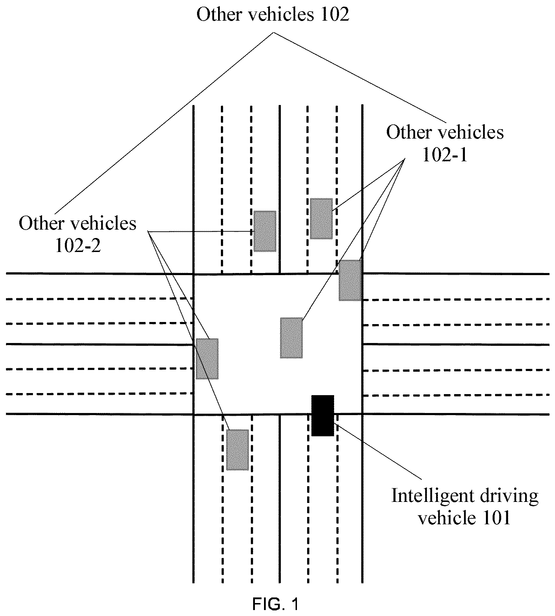

FIG. 1 is a schematic diagram of a scenario in which an intelligent driving vehicle passes through an intersection according to an exemplary embodiment of this disclosure. As shown in FIG. 1, in this scenario, a control system of the intelligent driving vehicle includes an intelligent driving vehicle 101 that is about to pass through the intersection and other vehicles 102 that are passing through the intersection and are driving around the intelligent driving vehicle 101. There may be a plurality of other vehicles 102 driving around the intelligent driving vehicle 101. FIG. 1 exemplarily shows other vehicles 102-1 driving in a same direction as the intelligent driving vehicle 101 and other vehicles 102-2 driving in a reverse direction (which is also referred to as an opposite direction) as the intelligent driving vehicle 101.

The intelligent driving vehicle 101 is provided with a plurality of sensors such as an in-vehicle camera, a laser radar, and a millimeter wave radar, which are configured to collect information about surrounding environments of the intelligent driving vehicle 101 and obtain current driving environment information. The current driving environment information includes information about a plurality of positions of the other vehicles 102-1 and information about a plurality of positions of the other vehicles 102-2. In this embodiment of this disclosure, traffic-flow historical trajectory information corresponding to an intersection section where the intelligent driving vehicle 101 is currently driving may be determined based on the information about the plurality of positions of the other vehicles 102-1 driving in the same direction as the intelligent driving vehicle 101.

The intelligent driving vehicle 101 is provided with a plurality of driving modes. In a non-intersection section, an accurate lane line may be recognized, and the intelligent driving vehicle 101 may drive in a conventional non-intersection mode. In an intersection section or other roads where lane lines cannot be recognized, the intelligent driving vehicle 101 may drive in an intersection mode.

Specifically, a control apparatus of the intelligent driving vehicle 101 obtains a driving mode of the intelligent driving vehicle at a current moment 101 and the current driving environment information collected by the plurality of sensors. If the driving mode of the intelligent driving vehicle at the current moment 101 is the intersection mode, the control apparatus determines traffic-flow historical trajectory information of the other vehicles 102-1 based on the information about the plurality of positions of the other vehicles 102-1; and then determines a target driving trajectory suitable for the intelligent driving vehicle 101 based on the traffic-flow historical trajectory information of the other vehicles 102-1 and the current driving environment information; and finally, controls the intelligent driving vehicle 101 to drive based on the target driving trajectory, so as to correctly and quickly pass through the intersection that is currently driven, thereby implementing safe driving of the vehicle.

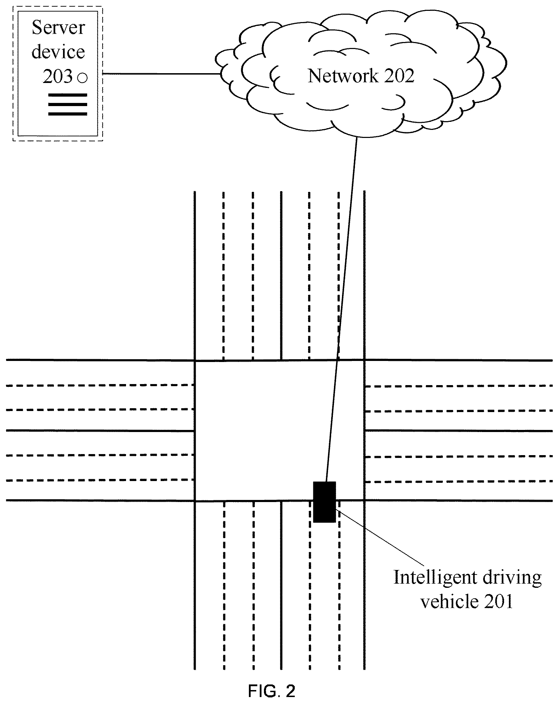

FIG. 2 is a schematic diagram of a scenarios in which an intelligent driving vehicle passes through an intersection according to another exemplary embodiment of this disclosure. As shown in FIG. 2, in this scenario, the control system of the intelligent driving vehicle includes an intelligent driving vehicle 201, a network 202, and a server device 203. The intelligent driving vehicle 201 is connected to the server device 203 through the network 202. The network 202 may be a wide area network, a local area network, or a combination of the two, which uses wireless links for data transmission.

The intelligent driving vehicle 201 is provided with a plurality of sensors such as an in-vehicle camera, a laser radar, and a millimeter wave radar, which are configured to collect information about surrounding environments of the intelligent driving vehicle 201 and obtain current driving environment information.

The intelligent driving vehicle 201 is provided with a plurality of driving modes. In a non-intersection section, an accurate lane line may be recognized, and the intelligent driving vehicle 201 may drive in a conventional non-intersection mode. In an intersection section, because lane lines cannot be recognized, the intelligent driving vehicle 201 may drive in an intersection mode.

The server device 203 stores traffic-flow historical trajectory information reported by vehicles passing through the intersection in a past period of time.

Specifically, a control apparatus of the intelligent driving vehicle 201 obtains a driving mode of the intelligent driving vehicle at a current moment 201 and the current driving environment information collected by the plurality of sensors. If the driving mode of the intelligent driving vehicle at the current moment 201 is the intersection mode, the control apparatus obtains the traffic-flow historical trajectory information from the server device 203 based on the current driving environment information; and then determines a target driving trajectory suitable for the intelligent driving vehicle 201 based on the traffic-flow historical trajectory information and the current driving environment information; and finally, controls the intelligent driving vehicle 201 to drive based on the target driving trajectory, so as to correctly and quickly pass through the intersection that is currently driven, thereby implementing safe driving of the vehicle.

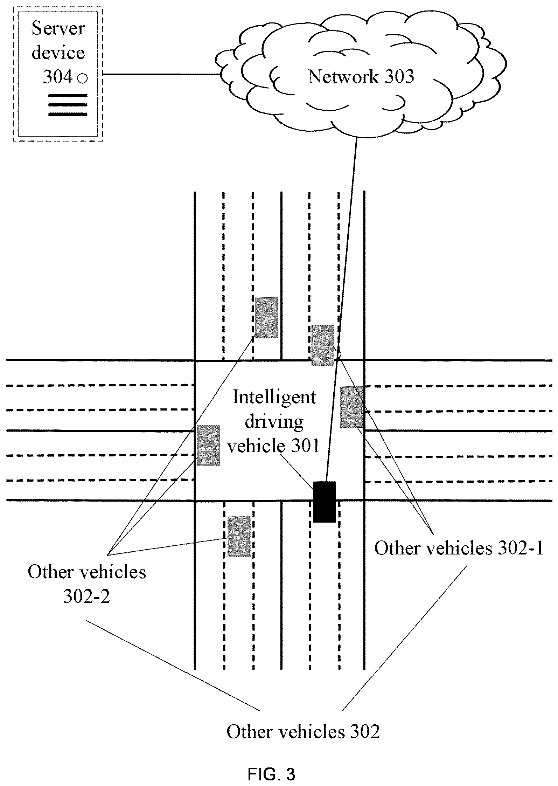

FIG. 3 is a schematic diagram of a scenarios in which an intelligent driving vehicle passes through an intersection according to still another exemplary embodiment of this disclosure. As shown in FIG. 3, in this scenario, a control system of the intelligent driving vehicle includes an intelligent driving vehicle 301 that is about to pass through the intersection, other vehicles 302 that are passing through the intersection and are driving around the intelligent driving vehicle 301, a network 303, and a server device 304. The intelligent driving vehicle 301 is connected to the server device 304 through the network 303. The network 303 may be a wide area network, a local area network, or a combination of the two, which uses wireless links for data transmission. There may be a plurality of other vehicles 302 driving around the intelligent driving vehicle 301. FIG. 3 exemplarily shows other vehicles 302-1 driving in a same direction as the intelligent driving vehicle 301 and other vehicles 302-2 driving in a reverse direction (which is also referred to as an opposite direction) as the intelligent driving vehicle 301.

The intelligent driving vehicle 301 is provided with a plurality of sensors such as an in-vehicle camera, a laser radar, and a millimeter wave radar, which are configured to collect information about surrounding environments of the intelligent driving vehicle 301 and obtain current driving environment information. The current driving environment information includes information about a plurality of positions of the other vehicles 302-1 and information about a plurality of positions of the other vehicles 302-2. In this embodiment of this disclosure, traffic-flow historical trajectory information corresponding to an intersection section where the intelligent driving vehicle 301 is currently driving may be determined based on the information about the plurality of positions of the other vehicles 302-1 driving in the same direction as the intelligent driving vehicle 301 and traffic-flow historical trajectory information stored in the server device 304.

The intelligent driving vehicle 301 is provided with a plurality of driving modes. In a non-intersection section, an accurate lane line may be recognized, and the intelligent driving vehicle 301 may drive in a conventional non-intersection mode. In an intersection section or other roads where lane lines cannot be recognized, the intelligent driving vehicle 301 may drive in an intersection mode.

The server device 304 stores traffic-flow historical trajectory information reported by vehicles passing through the intersection in a past period of time.

Specifically, a control apparatus of the intelligent driving vehicle 301 obtains a driving mode of the intelligent driving vehicle at a current moment 301 and the current driving environment information collected by the plurality of sensors. If the driving mode of the intelligent driving vehicle at the current moment 301 is the intersection mode, the control apparatus determines traffic-flow historical trajectory information corresponding to the intersection section that is currently driven based on the information about the plurality of positions of the other vehicles 302-1 and the traffic-flow historical trajectory information obtained from the server device 304; and then determines a target driving trajectory suitable for the intelligent driving vehicle 301 based on the determined traffic-flow historical trajectory information and the current driving environment information; and finally, controls the intelligent driving vehicle 301 to drive based on the target driving trajectory, so as to correctly and quickly pass through the intersection that is currently driven, thereby implementing safe driving of the vehicle.

According to the control system of the intelligent driving vehicle that is provided in the embodiments of this disclosure, whether at a regular or an irregular intersection and regardless of being a first vehicle, the intelligent driving vehicle can autonomously pass through the intersection. In this way, the vehicle can pass through the intersection correctly and quickly, thereby ensuring safe driving of the vehicle. Moreover, when determining the target driving trajectory, there is no need to rely on high-resolution images, which would not increase costs and would not be limited by actual environments, thereby ensuring that the vehicle can safely and stably pass through the intersection.

### Exemplary method

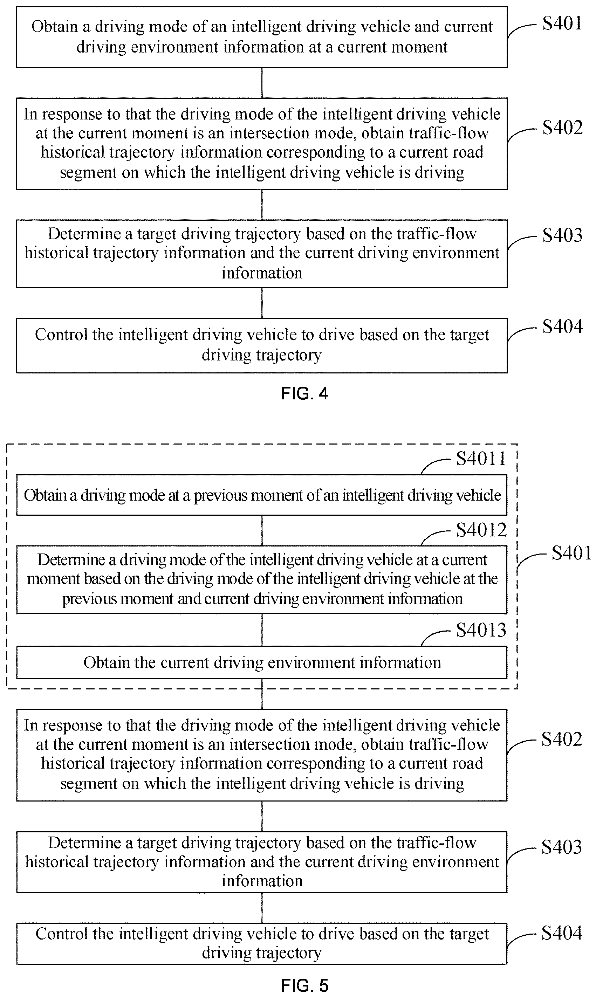

FIG. 4 is a schematic flowchart of an intelligent driving vehicle control method according to an exemplary embodiment of this disclosure. This embodiment of this disclosure may be applied to an intelligent driving vehicle in a control system shown in FIG. 1, FIG. 2, or FIG. 3. As shown in FIG. 4, the intelligent driving vehicle control method includes the following steps.

Step S401. Obtain a driving mode of the intelligent driving vehicle and current driving environment information at a current moment.

This embodiment of this disclosure may be implemented by the intelligent driving vehicle (vehicle for short) in the control system shown in FIG. 1, FIG. 2, or FIG. 3, and may be specifically implemented by a control apparatus on the vehicle.

Intersections are one of typical driving scenarios for an intelligent driving system. When the vehicle activates an intelligent driving function for assisted driving, the vehicle is controlled to switch between different driving modes according to whether a driving road is an intersection, so as to make sure that the vehicle safely and stably passes through an intersection without lane lines. In this embodiment of this disclosure, the driving modes of the intelligent driving vehicle may include an intersection mode and a non-intersection mode.

During a driving process of the vehicle, an imaging device on the vehicle collects images of a surrounding environment of the vehicle in a real-time manner, and recognizes a lane line in front of the vehicle. When a recognition result based on the lane line determines that a current road segment on which the vehicle is driving is not an intersection, the vehicle is controlled to drive in the non-intersection mode. When the recognition result based on the lane line determines that the current road segment on which the vehicle is driving is an intersection, the vehicle is controlled to drive in the intersection mode.

In this embodiment of this disclosure, during the driving process of the vehicle, the control apparatus obtains the driving mode of the vehicle at the current moment and the current driving environment information, and controls the vehicle to continue driving based on the driving mode at the current moment and the current driving environment information.

If the driving mode of the vehicle at the current moment is the intersection mode, it indicates that the vehicle is passing through an intersection, and the current road segment is an intersection section. If the driving mode of the vehicle at the current moment is the non-intersection mode, it indicates that the vehicle is driving on a regular road with lane lines.

In this embodiment of this disclosure, the current driving environment information may include current environment information detected in a real-time manner by a plurality of sensors on the vehicle and current driving information of the ego vehicle. For example, the current environment information may include image information collected by the image device on the vehicle, millimeter wave information collected by a millimeter wave radar, and laser beam information collected by a laser radar. The current driving information of the ego vehicle may include motion status parameter information of the vehicle, including but not limited to information such as a position, a driving mode, a speed, acceleration, and a yaw angle of the vehicle.

Step S402. In response to that the driving mode of the intelligent driving vehicle at the current moment is an intersection mode, obtain traffic-flow historical trajectory information corresponding to a current road segment on which the intelligent driving vehicle is driving.

It is determined whether the driving mode of the vehicle at the current moment is the intersection mode. When the driving mode of the vehicle at the current moment is the intersection mode, it indicates that the current road segment on which the vehicle is driving is an intersection section, and traffic-flow historical trajectory information corresponding to this intersection section is obtained. The traffic-flow historical trajectory information includes driving trajectories of a plurality of vehicles. The plurality of vehicles are vehicles that have passed through the intersection section prior to the ego vehicle, and the driving trajectories of the vehicles are determined based on a plurality of trajectory points (positions) collected when the various vehicles are passing through the intersection section.

The plurality of vehicles may be vehicles that pass through the current intersection section in a real-time manner. In this case, the traffic-flow historical trajectory information corresponding to the current intersection section includes driving trajectories of a plurality of vehicles driving in front of the ego vehicle. The plurality of vehicles may also be vehicles that have passed through the current intersection section in a past period of time (not in a real-time manner). For example, the past period of time is a previous day. In this case, the traffic-flow historical trajectory information corresponding to the current intersection section includes driving trajectories of a plurality of vehicles that passed through this intersection section in the previous day.

In some embodiments, when the driving mode of the vehicle at the current moment is not the intersection mode, it indicates that valid lane lines can be detected on the current road segment on which the vehicle is driving. A target driving trajectory of the vehicle is determined based on the detected valid lane lines, and the vehicle is controlled to drive based on the target driving trajectory.

Step S403. Determine a target driving trajectory based on the traffic-flow historical trajectory information and the current driving environment information.

The target driving trajectory of the ego vehicle is planed based on the driving trajectories of other vehicles passing through the current intersection section and real-time driving environment information.

The traffic-flow historical trajectory information may include driving trajectories of other vehicles in a current lane and driving trajectories of other vehicles in other lanes. Regardless of whether there are other vehicles in front of the ego vehicle in the current driving lane, when passing through an intersection, the traffic-flow historical trajectory information is determined based on other vehicles driving in a real-time manner in other lanes or other vehicles driving in a past period of time in the current intersection section. On this basis, the target driving trajectory of the ego vehicle is planned.

Step S404. Control the intelligent driving vehicle to drive based on the target driving trajectory.

After planning and obtaining the target driving trajectory, the control apparatus determines control instructions based on the target driving trajectory to control the vehicle to drive at a specific speed, specific acceleration, a specific yaw angle, and other control parameters, so that the vehicle passes through the intersection section autonomously, correctly, quickly, safely, and stably.

According to the intelligent driving vehicle control method provided in the embodiments of this disclosure, the driving mode of the intelligent driving vehicle at the current moment and the current driving environment information are obtained, so that the traffic-flow historical trajectory information corresponding to the current road segment is obtained when it is determined that the driving mode of the intelligent driving vehicle at the current moment is the intersection mode. Subsequently, the target driving trajectory is determined based on the traffic-flow historical trajectory information and the current driving environment information, and the intelligent driving vehicle is controlled to drive based on the target driving trajectory. In this way, the intelligent driving vehicle passes through the intersection section autonomously, correctly, and quickly.

In some embodiments, on the basis of the foregoing embodiments, step S401 of "obtaining a driving mode of the intelligent driving vehicle at a current moment and current driving environment information" in the foregoing embodiments may be implemented through steps S4011 to S4013 shown in FIG. 5.

Step S4011. Obtain a driving mode of the intelligent driving vehicle at a previous moment.

For example, when the vehicle drives in the intersection mode, the driving mode may be set to a first preset value; and when the vehicle drives in the non-intersection mode, the driving mode may be set to a second preset value.

When obtaining the driving mode of the vehicle at the current moment, the control apparatus first obtains the driving mode at the previous moment. If the obtained driving mode is the first preset value, it indicates that the vehicle drives in the intersection mode at the previous moment. If the obtained driving mode is the second preset value, it indicates that the vehicle drives in the non-intersection mode at the previous moment.

Step S4012. Determine the driving mode of the intelligent driving vehicle at the current moment based on the driving mode of the intelligent driving vehicle at the previous moment and the current driving environment information.

In combination with the current driving environment information, it is determined whether the driving road of the vehicle changes, so as to determine whether it is needed to switch the driving mode. If the driving road of the vehicle does not change, there is no need to switch the driving mode, and the driving mode at the current moment is the driving mode at the previous moment. If the driving path of the vehicle changes, for example, the vehicle enters an intersection road from a non-intersection road or enters a non-intersection road from an intersection road, the driving mode needs to be switched. In this case, the driving mode at the current moment is different from that at the previous moment.

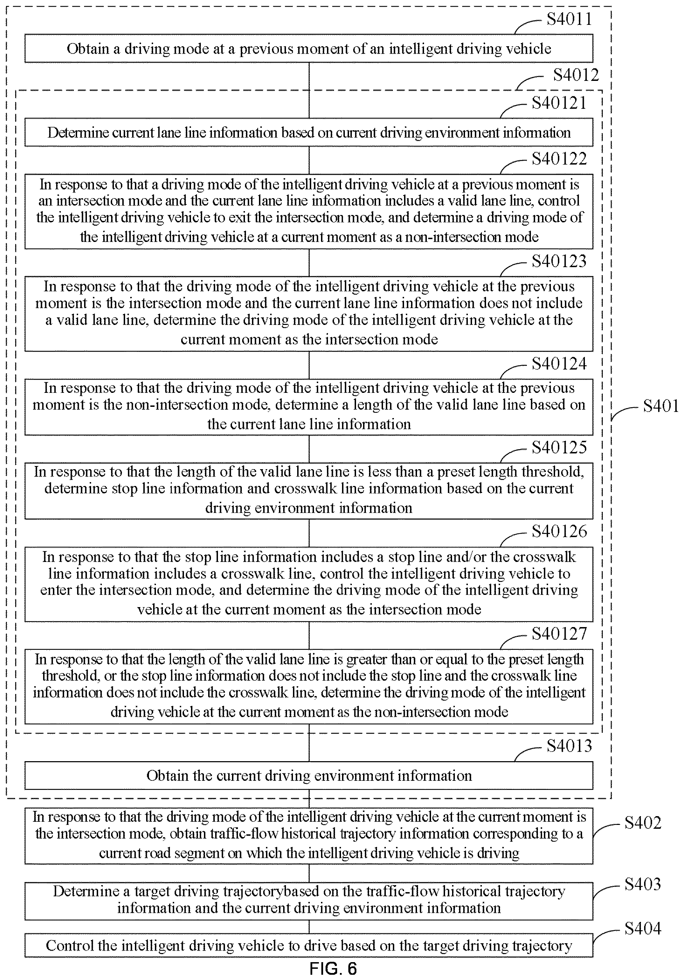

In some embodiments, the driving mode of the vehicle at the current moment may be determined according to the following steps S40121 to S40127 shown in FIG. 6.

Step S40121. Determine current lane line information based on the current driving environment information.

Lane lines consist of solid lines, dashed lines, grid lines, and the like; and colors include yellow, white, and the like. Feature extraction and recognition are performed on the image information in the current driving environment information to obtain a recognition result, so as to obtain the current lane line information included in the recognition result.

Step S40122. In response to that the driving mode of the intelligent driving vehicle at the previous moment is the intersection mode and the current lane line information includes a valid lane line, control the intelligent driving vehicle to exit the intersection mode, and determine the driving mode of the intelligent driving vehicle at the current moment as a non-intersection mode.

When the road driven by the vehicle at the previous moment is an intersection section, during a process in which the vehicle drives in the intersection mode in the intersection section, it is determined whether the current lane line information in the current driving environment information includes the valid lane line. If the current lane line information includes the valid lane line, it indicates that a new lane line capable of guiding driving of the vehicle is detected. In this case, it is considered that the vehicle has left the intersection and entered a normal road with lane lines. The control apparatus controls the vehicle to switch from the intersection mode to the non-intersection mode. Subsequently, vehicles may be controlled, based on the lane lines, to intelligently drive in lanes corresponding to the lane lines.

In the embodiments of this disclosure, the valid lane line specifically refers to a lane line of the lane where the ego vehicle is located. If the current lane line information includes a lane line, but this lane line is for another lane, this lane line is referred to as an invalid lane line.

Step S40123. In response to that the driving mode of the intelligent driving vehicle at the previous moment is the intersection mode and the current lane line information does not include a valid lane line, determine the driving mode of the intelligent driving vehicle at the current moment as the intersection mode.

If the current lane line information does not include the valid lane line, it indicates that no lane line capable of guiding driving of the ego vehicle is detected. In this case, it is considered that the control apparatus controls the driving mode of the vehicle to be remained in the intersection mode during a process in which the vehicle passes through the current intersection

Step S40124. In response to that the driving mode of the intelligent driving vehicle at the previous moment is the non-intersection mode, determine a length of the valid lane line based on the current lane line information.

When the road driven by the vehicle at the previous moment is a non-intersection section, during a process in which the vehicle drives in the non-intersection mode in the non-intersection section, the length of the valid lane line is determined after the valid lane line included in the current lane line information in the current driving environment information is detected. In other words, when the vehicle is driving in the non-intersection section, the length of the valid lane line that can be detected in the lane where the ego vehicle is located is obtained.

Step S40125. In response to that the length of the valid lane line is less than a preset length threshold, determine stop line information and crosswalk line information based on the current driving environment information.

It is determined whether the length of the valid lane line is less than the preset length threshold. If the length of the valid lane line is less than the preset length threshold, the stop line information and the crosswalk line information included in a recognition result corresponding to the current driving environment information are obtained.

The preset length threshold may be set to different values based on factors such as different speeds and different roads. For example, the preset length threshold is set to 3 m (meters).

Step S40126. In response to that the stop line information includes a stop line and/or the crosswalk line information includes a crosswalk line, control the intelligent driving vehicle to enter the intersection mode, and determine the driving mode of the intelligent driving vehicle at the current moment as the intersection mode.

Generally, the intersection is provided with stop lines for vehicles to wait for traffic signals and crosswalk lines (which are also referred to as zebra crossings) for pedestrians to pass through. Therefore, based on the stop line and the crosswalk line, it may be determined whether the vehicle is about to enter the intersection section.

Specifically, the stop line information may be used to determine whether there is a stop line in front of the vehicle. If the stop line information does not include a stop line, it indicates that there is no stop line in front of the vehicle or no stop line is recognized. In this case, the crosswalk line information may be further used to determine whether there is a crosswalk line in front of the vehicle. If the crosswalk line information includes a crosswalk line, it indicates that there is a crosswalk line in front of the vehicle. When it is detected that the length of the valid lane line in front of the lane where the vehicle is located is less than the preset length threshold, and a stop line or a crosswalk line is detected, it is considered that a road in front of the vehicle is an intersection section. In this case, the vehicle is controlled to switch from the non-intersection mode to the intersection mode.

In the embodiments of this disclosure, on the basis that the length of the valid lane line is less than the preset length threshold, further determining whether there is a stop line or a crosswalk line in front of the vehicle can improve accuracy of determining the intersection section, and avoid mistakenly determining the non-intersection section as the intersection section due to blurry lane lines, dark lighting, interference with the image device, and other reasons.

Step S40127. In response to that the length of the valid lane line is greater than or equal to the preset length threshold, or the stop line information does not include the stop line and the crosswalk line information does not include the crosswalk line, determine the driving mode of the intelligent driving vehicle at the current moment as the non-intersection mode.

When the length of the valid lane line is greater than or equal to the preset length threshold, it indicates that there is no intersection within a range of the preset length threshold in front of the lane of the ego vehicle. Alternatively, when the length of the valid lane line is less than the preset length threshold but no stop line or crosswalk line is detected, it is also considered that there is no intersection within the range of the preset length threshold in front of the ego vehicle. When it is determined that a road within the range of the preset length threshold in front of the vehicle is not an intersection section, the vehicle is controlled to continue intelligent driving in the non-intersection mode.

Step S4013. Obtain the current driving environment information.

In the embodiments of this disclosure, the lane line information, the stop line information, and the crosswalk line information that are determined based on the current driving environment information are used to determine an actual situation of a road ahead. Based on this, the driving mode of the vehicle at the current moment is determined by combining the road ahead and the driving mode at the previous moment of the vehicle, which helps improve accuracy of determining the intersection section.

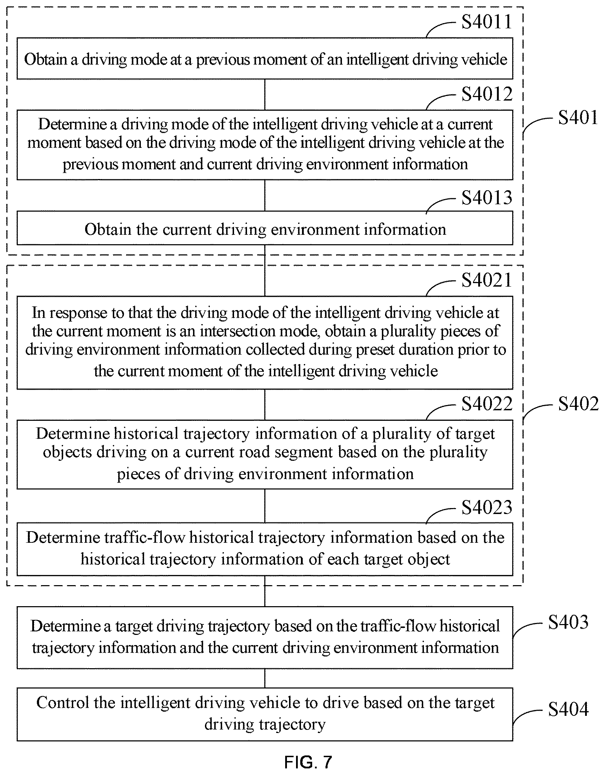

In some embodiments, on the basis of the foregoing embodiments, step S402 of "in response to that the driving mode of the intelligent driving vehicle at the current moment is an intersection mode, obtaining traffic-flow historical trajectory information corresponding to a current road segment on which the intelligent driving vehicle is driving" in the foregoing embodiments may be implemented through steps S4021 to S4023 shown in FIG. 7.

Step S4021. In response to that the driving mode of the intelligent driving vehicle at the current moment is the intersection mode, obtain a plurality pieces of driving environment information collected during preset duration prior to the current moment of the intelligent driving vehicle.

If the vehicle is currently driving in the intersection section, the plurality pieces of driving environment information collected during the preset duration prior to the current moment of the vehicle may be obtained from a data memory disposed on the vehicle. The plurality pieces of driving environment information may be environment information corresponding to various moments that is detected by a plurality of sensors on the vehicle at different moments and driving information of the ego vehicle. The data storage may include a driving recorder for storing the driving information of the ego vehicle and a data recording device for storing the environment information.

Environment information corresponding to an ith moment may include image information collected by the image device on the vehicle at the ith moment, the millimeter wave information collected by the millimeter wave radar, and the laser beam information collected by the laser radar. Driving information of the ego vehicle that corresponds to the ith moment may include motion status parameter information of the vehicle at the ith moment, including but not limited to information such as a position, a driving mode, a speed, acceleration, and a yaw angle of the vehicle at the ith moment. A value of i may be a positive integer that is not greater than a quantity of collection times.

The preset duration may be set to different values according to factors such as different roads and different speeds. For example, the value of the preset duration is 10s (seconds).

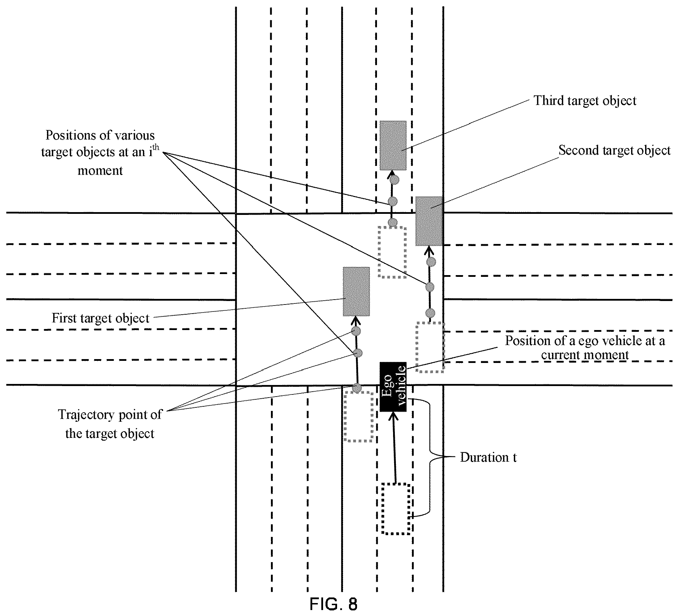

FIG. 8 is a schematic diagram illustrating that an intelligent driving vehicle passes through an intersection section according to an exemplary embodiment of this disclosure. As shown in FIG. 8, the driving mode at the current moment of the ego vehicle is the intersection mode, the preset duration is denoted as t, and a plurality pieces of environment information stored in the data memory within duration of t is obtained. For example, if storage is performed 3 times within the duration of t, 3 pieces of driving environment information are obtained. Each piece of driving environment information is used to determine a position of each target object, so that the 3 pieces of driving environment information may be used to determine 3 positions of each target object, such as 3 dots shown in FIG. 8. A value of t may be any value greater than 0, such as 10s.

Step S4022. Determine historical trajectory information of a plurality of target objects driving on the current road segment based on the plurality pieces of driving environment information.

A plurality of target objects around the ego vehicle within the preset duration and positions of the target objects are determined based on the environment information in the driving environment information at each moment. The historical trajectory information of each target object is determined based on a plurality of positions of a same target object. The historical trajectory information may include a driving trajectory of the target object when passing through the current road segment.

As shown in FIG. 8, the target objects include other vehicles in front of the ego vehicle, which may be in a same lane as the ego vehicle or in different lanes. A driving trajectory in driving trajectory information of each target object is shown in FIG. 8, and a direction of an arrow indicates a driving direction.

Step S4023. Determine the traffic-flow historical trajectory information based on the historical trajectory information of each target object.

The historical trajectory information of the target objects forms the traffic-flow historical trajectory information corresponding to the current road segment. The traffic-flow historical trajectory information includes the historical trajectory information of the plurality of target objects.

In the embodiments of this disclosure, the intelligent driving vehicle determines the historical trajectory information of the plurality of target objects driving on the current road segment at the current moment based on the plurality pieces of driving environment information collected during the preset duration, thus providing data support for determining the target driving trajectory in the future.

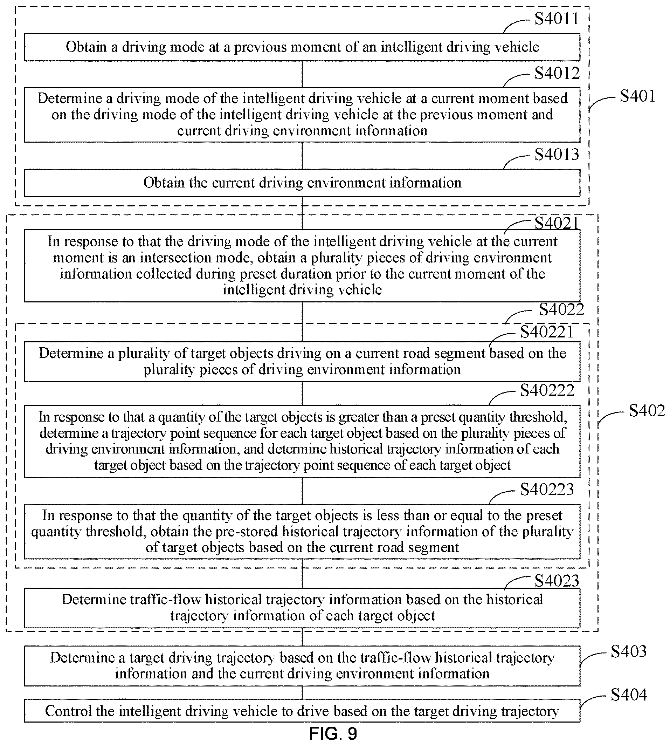

In some embodiments, on the basis of the foregoing embodiments, step S4022 of "determining historical trajectory information of a plurality of target objects driving on the current road segment based on the plurality pieces of driving environment information" in the foregoing embodiments may be implemented through steps S40221 to S40223 shown in FIG. 9.

Step S40221. Determine the plurality of target objects driving on the current road segment based on the plurality pieces of driving environment information.

Target recognition is performed on the driving environment information at each moment to obtain the plurality of target objects driving on the current road segment. As shown in FIG. 8, a first target object, a second target object, and a third target object are recognized. It should be noted that because a driving trajectory of a vehicle driving in an opposite direction has no referential value for the ego vehicle, in the embodiments of this disclosure, only objects driving in a same direction are recognized during the target recognition. In other words, a plurality of objects in a same orientation as the ego vehicle among all recognized objects are used as target objects.

At the current moment, if there are too few vehicles around or there are no other vehicles in front of the ego vehicle, the target object cannot be recognized based on the driving environment information obtained in a real-time manner. In this case, non-real-time driving environment information needs to be obtained to determine the historical trajectory information.

In an implementation, after the target objects are determined based on the plurality pieces of driving environment information obtained in a real-time manner, it is determined whether a quantity of the target objects is greater than a preset quantity threshold. If the quantity of the target objects is greater than the preset quantity threshold, it indicates that the plurality of target objects on the current road segment at the current moment are sufficient to be used as reference objects for determining a reference trajectory, and step S40222 is performed. If the quantity of the target objects is less than or equal to the preset quantity threshold, it indicates that the plurality of target objects on the current road segment at the current moment are not sufficient to be used as reference objects for determining the reference trajectory. In this case, step S40223 is performed.

In the embodiments of this disclosure, the preset quantity threshold may be set to different values according to actual situations. For example, the preset quantity threshold may be set to 2.

Step S40222. In response to that a quantity of the target objects is greater than a preset quantity threshold, determine a trajectory point sequence for each target object based on the plurality pieces of driving environment information, and determine the historical trajectory information of each target object based on the trajectory point sequence of each target object.

When the plurality of target objects on the current road segment at the current moment are sufficient to be used as reference objects for determining the reference trajectory, the trajectory point sequence of each target object is determined based on the driving environment information at each moment. For example, a trajectory point sequence of the first target object is shown in FIG. 8.

After the trajectory point sequence of each target object is determined, the corresponding historical trajectory information is determined based on the trajectory point sequence of each target object. For example, the historical trajectory information of the first target object is shown in FIG. 8.

Step S40223. In response to that the quantity of the target objects is less than or equal to the preset quantity threshold, obtain the pre-stored historical trajectory information of the plurality of target objects based on the current road segment.

When the plurality of target objects on the current road segment at the current moment are not sufficient to be used as a reference for determining the reference trajectory, the reference trajectory may be determined with reference to vehicles driving on the current road segment in other periods of time. The driving trajectory information of the plurality of target objects that is pre-stored for the current road segment may be stored in the server device shown in FIG. 2 or FIG. 3, or may be stored in a local data memory of the ego vehicle. This is not limited in the embodiments of this disclosure.

In the embodiments of this disclosure, it is determined whether a quantity of vehicles driving in a same direction on the current road segment at the current moment is greater than the preset quantity threshold. When the quantity is greater than the preset quantity threshold, the historical trajectory information of each target object is determined based on driving environment information collected in a real-time manner. When the quantity is not greater than the preset quantity threshold, the historical trajectory information of each target object is determined based on driving environment information collected in a non-real-time manner. In this way, reliability of the historical trajectory information can be ensured.

In practical applications, in a scenario shown in FIG. 1, the historical trajectory information of each target object may be determined based on the driving environment information collected in a real-time manner; in a scenario shown in FIG. 2, the historical trajectory information of each target object may be determined based on the driving environment information collected in a non-real-time manner; in a scenario shown in FIG. 3, the historical trajectory information of each target object may be determined based on the driving environment information collected in a real-time manner and the pre-stored historical trajectory information of the plurality of target objects; and in other scenarios, the historical trajectory information of each target object may also be determined in other modes. This is not limited in the embodiments of this disclosure.

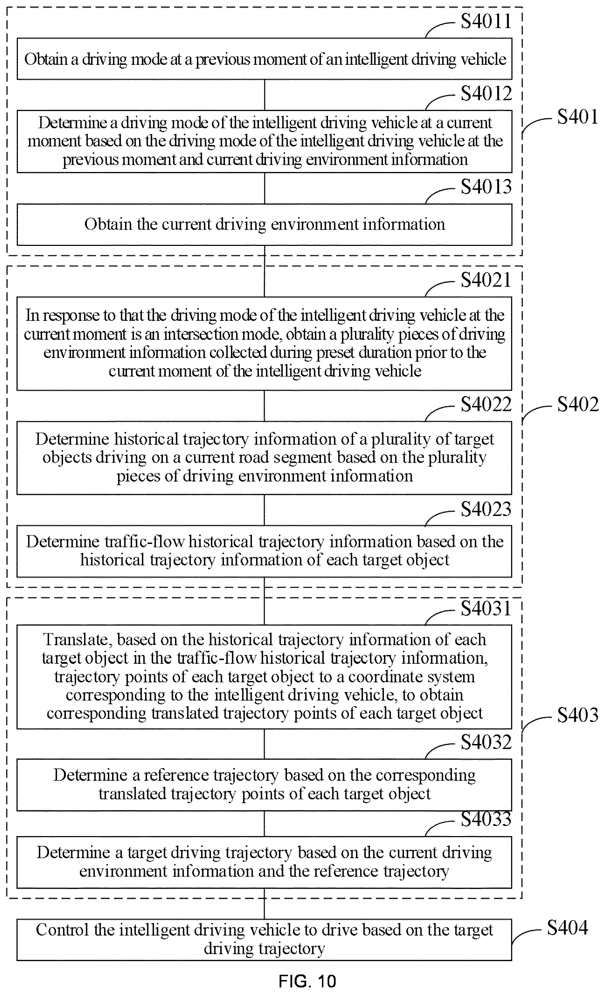

In some embodiments, on the basis of the foregoing embodiments, step S403 of "determining a target driving trajectory based on the traffic-flow historical trajectory information and the current driving environment information" in the foregoing embodiments may be implemented through steps S4031 to S4033 shown in FIG. 10.

Step S4031. Translate, based on the historical trajectory information of each target object in the traffic-flow historical trajectory information, trajectory points of each target object to a coordinate system corresponding to the intelligent driving vehicle, to obtain corresponding translated trajectory points of each target object.

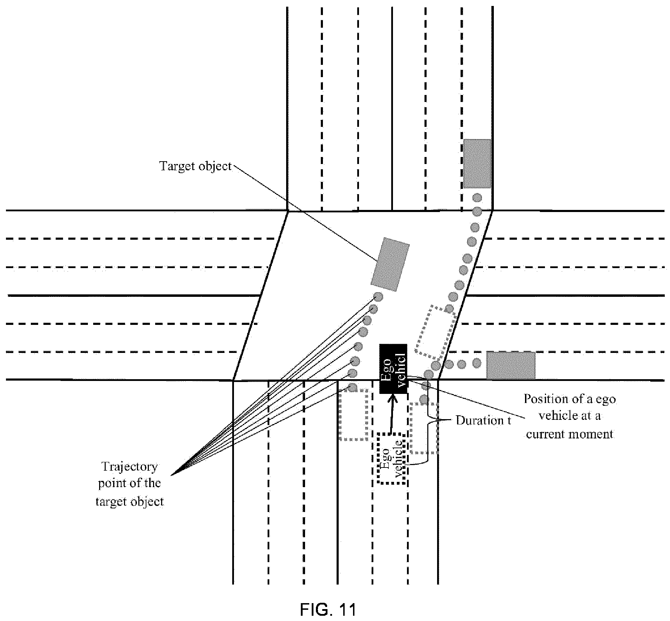

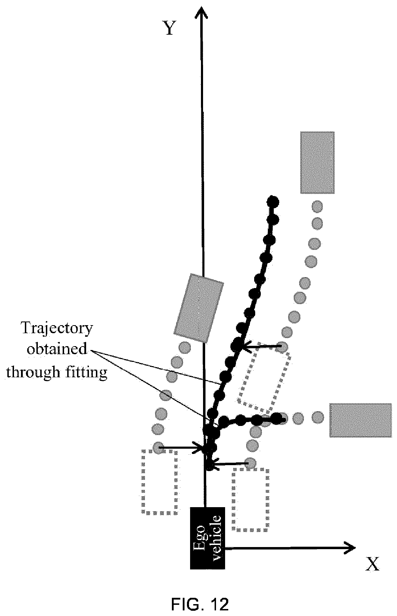

FIG. 11 is a schematic diagram illustrating that an intelligent driving vehicle passes through an intersection section according to another exemplary embodiment of this disclosure. FIG. 12 is a schematic diagram of translated trajectory points obtained by translating trajectory points of each target object shown in FIG. 11. As shown in FIG. 11 and FIG. 12, when the driving mode of the vehicle switches from the non-intersection mode to the intersection mode, the coordinate system corresponding to the intelligent driving vehicle may be established based on a center of a rear axle of the vehicle at that moment. An origin of the coordinate system may be a center point of the rear axle, a forward direction of the vehicle may be a positive direction of a Y-axis, and a direction perpendicular to the Y-axis to the right may be a positive direction of an X-axis. After the coordinate system corresponding to the intelligent driving vehicle is established, the trajectory points of each target object are translated in an X-axis direction.

As shown in FIG. 12, trajectory points of the target object that are located on a left side of the ego vehicle are moved to the right along the X-axis by a target length, and trajectory points of the target object that are located on a right side of the ego vehicle are moved to the left along the X-axis by a target length. The trajectory points of the target object located in front of the lane where the vehicle is located are not required to be translated. The target length may be determined based on a width of the lane. Specifically, the target length may be determined based on a product of a quantity of lanes between the target object and the ego vehicle and the width of the lane. For example, if there are 2 lanes between the target object and the ego vehicle and the width of the lane is 3.5 m, the target length is 2 * 3.5 m=7 m.

Step S4032. Determine a reference trajectory based on the corresponding translated trajectory points of each target object.

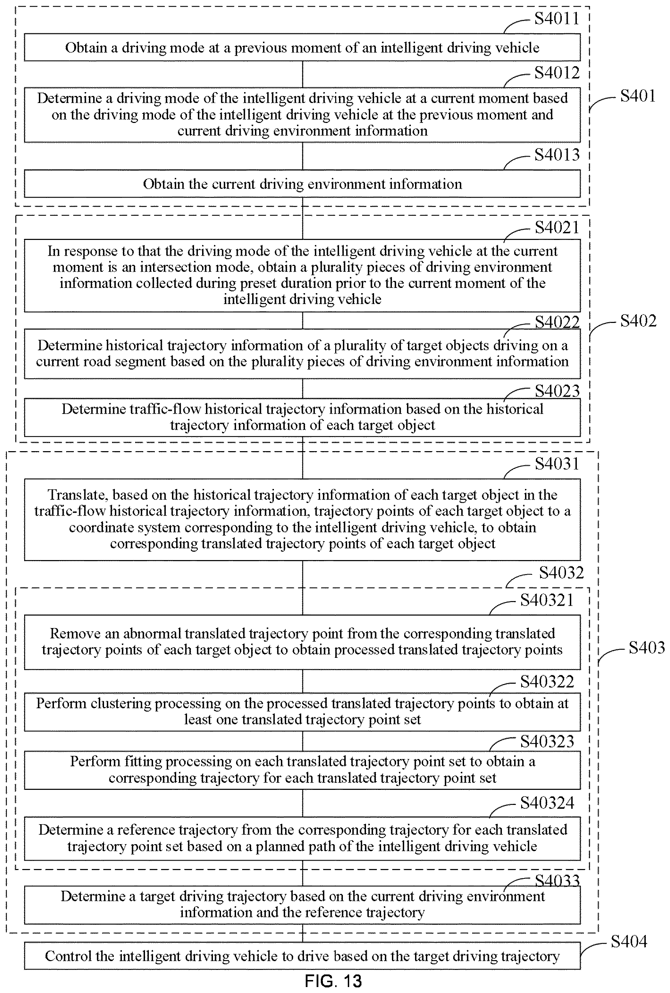

In FIG. 12, the trajectory points of each target object are marked as gray dots, and the translated trajectory points are marked as black dots. The reference trajectory is determined based on the corresponding translated trajectory points of each target object. In an implementation, the reference trajectory may be determined according to steps S40321 to S40324 shown in FIG. 13.

Step S40321. Remove an abnormal translated trajectory point from the corresponding translated trajectory points of each target object to obtain processed translated trajectory points.

The intelligent driving vehicle and each target object are moving and may be affected by factors such as ambient light, which may cause the position of the target object recognized through the image information to deviate, and may result in abnormal translated trajectory points. Therefore, before the reference trajectory is determined, the translated trajectory points of each target object that are determined in step S4031 may be first filtered to remove the abnormal translated trajectory point in the translated trajectory points of each target object, to obtain the processed translated trajectory points.

During movement of the target object, jumps would not occur to the position in a short period of time. Based on this, the translated trajectory points with obvious jumps relative to the preceding and/or succeeding translated trajectory points among the translated trajectory points of each target object may be determined. These translated trajectory points with obvious jumps are removed as abnormal translated trajectory points, and remaining translated trajectory points are used as the processed translated trajectory points.

Step S40322. Perform clustering processing on the processed translated trajectory points to obtain at least one translated trajectory point set.

At least one translated trajectory point set is obtained by clustering the remaining translated trajectory points after the abnormal translated trajectory points are preliminarily removed. A quantity of translated trajectory point sets is not greater than a quantity of final orientations of other vehicles on the current road segment. As shown in FIG. 12, one target object turns right at the intersection and faces rightward, while other two target objects drives straight at the intersection and face forward. The processed translated trajectory points corresponding to the three vehicles are clustered, and the processed translated trajectory points corresponding to the two target objects that face forward are clustered into one class. Therefore, two translated trajectory point sets are obtained.

In some embodiments, during the clustering processing, scatter points that are far away from a cluster center point may be further removed. In this way, accuracy of the reference trajectory may be further improved.

Step S40323. Perform fitting processing on each translated trajectory point set to obtain a corresponding trajectory for each translated trajectory point set.

Fitting is performed based on the translated trajectory point sets, and each translated trajectory point set is fitted as a curved line or a straight line. The fitted curved line or straight line is the trajectory corresponding to each translated trajectory point set, as shown in FIG. 12.

Step S40324. Determine the reference trajectory from the corresponding trajectory for each translated trajectory point set based on a planned path of the intelligent driving vehicle.

A forward direction of the ego vehicle on the current road segment is determined based on the planned path of the intelligent driving vehicle. Based on the forward direction, a trajectory that matches a forward direction of the planned path is selected from the trajectories corresponding to the various translated trajectory point sets to serve as the reference trajectory.

For example, based on the planned path of the intelligent driving vehicle, if it is determined that the forward direction of the ego vehicle on the current road segment is driving straight, a trajectory of driving straight is selected as the reference trajectory.

Step S4033. Determine the target driving trajectory based on the current driving environment information and the reference trajectory.

As a driving environment is constantly changing, after the reference trajectory is determined, it is also needed to determine the target driving trajectory of the ego vehicle in combination with the current driving environment information. For example, based on the current driving environment information, if it is determined that a road corresponding to the reference trajectory cannot be passed due to water-filled barriers or other obstacles that are temporarily placed, the reference trajectory may be moved leftward or rightward to obtain a target driving trajectory that can avoid the obstacles.

In some embodiments, after the intelligent driving vehicle leaves the current intersection section, the driving trajectory information of the intelligent driving vehicle is determined based on an actual driving trajectory of the intelligent driving vehicle, and is stored locally. When the intelligent driving vehicle passes through the intersection again, the previous driving trajectory information may be obtained locally to determine a new target driving trajectory. The intelligent driving vehicle may also report the driving trajectory information thereof to the server device, which may distribute the same to other vehicles passing through the intersection section afterwards, so that the other vehicles determine their target driving trajectory.

In the embodiments of this disclosure, the reference trajectory is determined based on driving trajectories of a plurality of other vehicles driving on the current road segment at the current moment or at a past moment, and the target driving trajectory of the ego vehicle is determined in combination with the current driving environment information. In this way, whether at regular or irregular intersections, and regardless of whether the ego vehicle is a first vehicle, the target driving trajectory suitable for the ego vehicle can be generated based on trajectories of other vehicles driving at this intersection section. Moreover, the vehicle can pass through the intersection correctly and quickly without relying on high-resolution images or increasing costs, thereby ensuring safe driving of the vehicle.

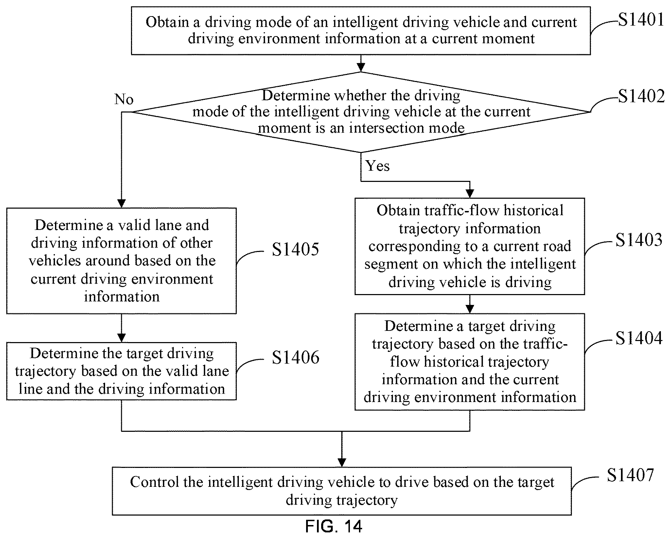

In the foregoing embodiments, an embodiment of this disclosure further provides an intelligent driving vehicle control method. FIG. 14 is a schematic flowchart of an intelligent driving vehicle control method according to a yet further exemplary embodiment of this disclosure. As shown in FIG. 14, the intelligent driving vehicle control method includes the following steps.

Step S1401. Obtain a driving mode of the intelligent driving vehicle and current driving environment information at a current moment.

The driving mode of the vehicle at the current moment and the current driving environment information are obtained when the vehicle activates an intelligent driving function. Driving modes of the intelligent driving vehicle may include an intersection mode and a non-intersection mode.

The current driving environment information may include current environment information detected in a real-time manner by a plurality of sensors on the vehicle and current driving information of the ego vehicle. For example, the current environment information may include image information collected by an image device on the vehicle, millimeter wave information collected by a millimeter wave radar, and laser beam information collected by a laser radar. The current driving information of the ego vehicle may include motion status parameter information of the vehicle, including but not limited to information such as a position, a driving mode, a speed, acceleration, and a yaw angle of the vehicle.

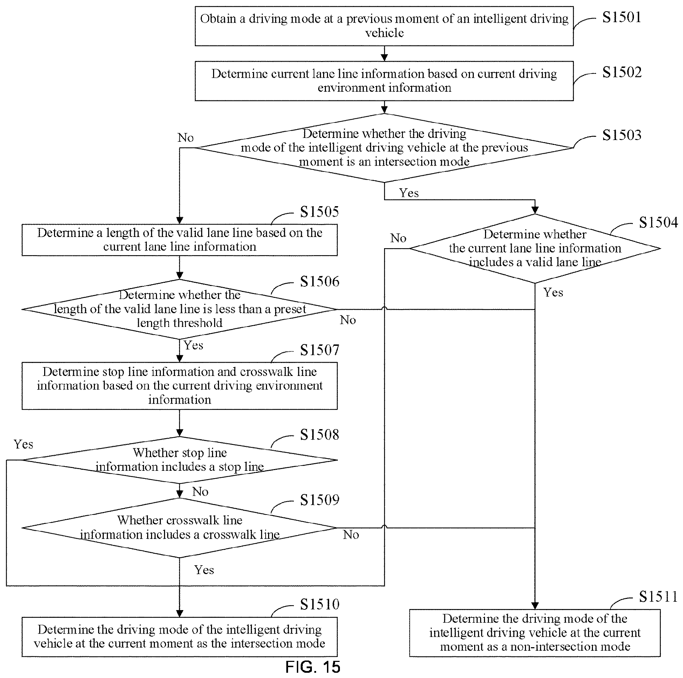

In some embodiments, the driving mode of the intelligent driving vehicle at the current moment may be determined according to the following steps shown in FIG. 15.

Step S1501. Obtain a driving mode of the intelligent driving vehicle at a previous moment.

When obtaining the driving mode of the vehicle at the current moment, a control apparatus first obtains the driving mode at the previous moment. If the obtained driving mode is a first preset value, it indicates that the vehicle drives in the intersection mode at the previous moment. If the obtained driving mode is a second preset value, it indicates that the vehicle drives in the non-intersection mode at the previous moment.

Step S1502. Determine current lane line information based on the current driving environment information.

Lane lines consist of solid lines, dashed lines, grid lines, and the like; and colors include yellow, white, and the like. Feature extraction and recognition are performed on the image information in the current driving environment information to obtain a recognition result, so as to obtain the current lane line information included in the recognition result.

Step S1503. Determine whether the driving mode of the intelligent driving vehicle at the previous moment is an intersection mode.

If the driving mode of the intelligent driving vehicle at the previous moment is the intersection mode, step S1504 is performed. If the driving mode of the intelligent driving vehicle at the previous moment is the non-intersection mode (that is, is not the intersection mode), step S1505 is performed.

Step S1504. Determine whether the current lane line information includes a valid lane line.

The image information collected by the image device is recognized to obtain the recognition result. For example, the recognition result includes road elements and objects around. The road elements may include road boundaries, lane lines, ground arrows, stop lines, crosswalk lines (which are also referred to as zebra crossings), or traffic lights. The objects around may include vehicles, pedestrians, water-filled barriers, or guardrails. The road elements may also include other elements, and the objects around may also include other objects. This is not limited in the embodiments of this disclosure.

Whether the current lane line information includes lane lines is determined based on the recognition result. If lane lines are recognized, it is determined that the current lane line information includes the lane lines, and it is further determined whether the lane line includes the valid lane line.

If the lane lines include a lane line of a lane where the ego vehicle is located, the lane line of the lane where the ego vehicle is located is used as the valid lane line, and it is determined that the lane lines include the valid lane line. In this case, step S1511 is performed. If the lane lines do not include the lane line of the lane where the ego vehicle is located, a lane line of a lane where the ego vehicle is not located is used as an invalid lane line, and it is determined that the lane lines do not include the valid lane line. In this case, step S1510 is performed.

Step S1505. Determine a length of the valid lane line based on the current lane line information.

A length of the lane where the intelligent driving vehicle is located is determined based on the recognition result corresponding to the current driving environment information, to obtain the length of the valid lane line.

Step S1506. Determine whether the length of the valid lane line is less than a preset length threshold.

If the length of the valid lane line is less than the preset length threshold, step 1507 is performed. If the length of the valid lane line is not less than the preset length threshold, step S1511 is performed.

Step S1507. Determine stop line information and crosswalk line information based on the current driving environment information.

The stop line information and the crosswalk line information are determined based on the recognition result corresponding to the current driving environment information.

Step S1508. Determine whether the stop line information includes a stop line.

If the stop line information includes a stop line, step S1510 is performed. If the stop line information does not include the stop line, step S1509 is performed.

Step S1509. Determine whether the crosswalk line information includes a crosswalk line.

If the crosswalk line information includes a crosswalk line, step S1510 is performed. If the crosswalk line information does not include the crosswalk line, step S1511 is performed.

Step S1510. Determine the driving mode of the intelligent driving vehicle at the current moment as the intersection mode.

If this step is performed after step 1504 is completed, when the driving mode at the previous moment of the vehicle is the intersection mode and no valid lane line is detected in the current driving environment information, it indicates that the lane line of the lane where the vehicle is located is still not detected during the process in which the vehicle drives in the intersection section. In this case, the vehicle continues intelligent driving in the intersection mode.

If this step is performed after step S1508 or S1509 is completed, when the driving mode at the previous moment of the vehicle is the non-intersection mode, it is detected in the current driving environment information that the length of the valid lane line is less than the preset length threshold, and the stop line or the crosswalk line is detected, it indicates that the vehicle is detected and is about to enter the intersection section. In this case, the driving mode is switched from the non-intersection mode to the intersection mode, so that the intelligent driving vehicle can subsequently drive in the intersection mode.

Step S1511. Determine the driving mode of the intelligent driving vehicle at the current moment as a non-intersection mode.

If this step is performed after step 1504 is completed, when the driving mode at the previous moment of the vehicle is the intersection mode and the valid lane line is detected in the current driving environment information, it indicates that the lane line of the lane where the vehicle is located is detected again during the process in which the vehicle drives in the intersection section. In this case, the driving mode is switched from the intersection mode to the non-intersection mode, so that the intelligent driving vehicle can subsequently perform intelligent driving in the non-intersection mode.

If this step is performed after step S1506 or S1509 is completed, when the driving mode at the previous moment of the vehicle is the non-intersection mode, it is detected in the current driving environment information that the length of the valid lane line is not less than the preset length threshold, or the length of the valid lane line is less than the preset length threshold but neither the stop line nor the crosswalk line is detected, it indicates that no intersection section is detected by the vehicle. In this case, the vehicle continues driving in the non-intersection mode.

Step S1402. Determine whether the driving mode of the intelligent driving vehicle at the current moment is the intersection mode.

It is determined whether the driving mode of the vehicle at the current moment is the intersection mode. If it is determined according to step S1510 that the driving mode at the current moment is the intersection mode, it indicates that a current road segment on which the vehicle is driving is an intersection section, and step S1403 is performed. If it is determined according to step S1511 that the driving mode at the current moment is the non-intersection mode, it indicates that the current road segment on which the vehicle is driving is not an intersection section. In this case, step S1405 is performed.

Step S1403. Obtain traffic-flow historical trajectory information corresponding to a current road segment on which the intelligent driving vehicle is driving.

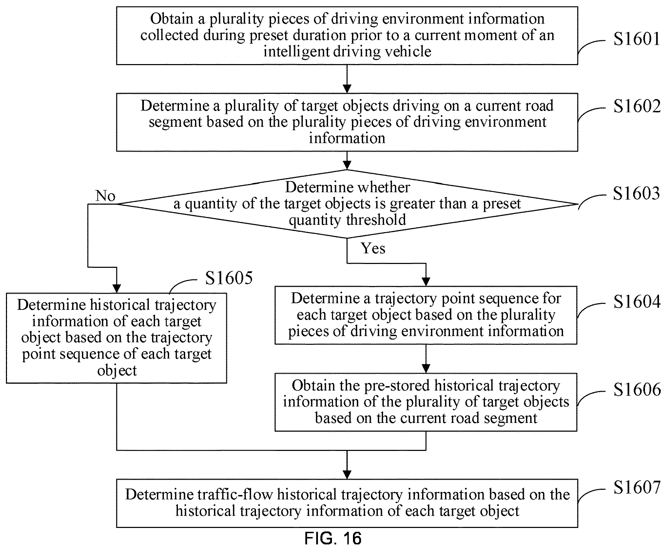

The traffic-flow historical trajectory information includes driving trajectories of a plurality of target objects (such as vehicles). The target objects may be vehicles that have passed through the current road segment prior to the intelligent driving vehicle, and the driving trajectories of the various vehicles are determined based on a plurality of position points collected when the vehicles are passing through the intersection section. In some embodiments, the traffic-flow historical trajectory information may be determined according to the following steps shown in FIG. 16.

Step S1601. Obtain a plurality pieces of driving environment information collected during preset duration prior to the current moment of the intelligent driving vehicle.

In some embodiments, an intelligent driving vehicle control apparatus may obtain the plurality pieces of driving environment information collected during the preset duration prior to the current moment of the vehicle from a data memory of the intelligent driving vehicle. The plurality pieces of driving environment information may be environment information corresponding to various moments that is detected by a plurality of sensors on the vehicle at different moments and driving information of the ego vehicle.

Environment information corresponding to an ith moment may include image information collected by the image device on the vehicle at the ith moment, the millimeter wave information collected by the millimeter wave radar, and the laser beam information collected by the laser radar. Driving information of the ego vehicle that corresponds to the ith moment may include motion status parameter information of the vehicle at the ith moment, including but not limited to information such as a position, a driving mode, a speed, acceleration, and a yaw angle of the vehicle at the ith moment.

Step S1602. Determine a plurality of target objects driving on the current road segment based on the plurality pieces of driving environment information.

Target recognition is performed on the driving environment information at each moment to obtain the plurality of target objects driving on the current road segment.

It should be noted that because a driving trajectory of a vehicle driving in an opposite direction has no referential value for the ego vehicle, in the embodiments of this disclosure, during the target recognition, objects driving in a same direction as the ego vehicle among recognized objects are used as the target objects.

Step S1603. Determine whether a quantity of the target objects is greater than a preset quantity threshold.

If the quantity of the target objects is greater than the preset quantity threshold, step S1604 is performed. If the quantity of the target objects is less than or equal to the preset quantity threshold, step S1606 is performed.

Step S1604. Determine a trajectory point sequence for each target object based on the plurality pieces of driving environment information.

The trajectory point sequence of the target object includes a plurality of trajectory points that are sequenced in time. When the quantity of the target objects driving on the current road segment at the current moment is greater than the preset quantity threshold, it indicates that the plurality of target objects driving on the current road segment at the current moment are sufficient to be used as reference objects for determining a reference trajectory. The trajectory points of each target object are determined based on driving environment information of the intelligent driving vehicle that is collected in past duration of t. A plurality of trajectory points of a same target object are sequenced in a chronological order to form the trajectory point sequence of this target object.

Step S1605. Determine historical trajectory information of each target object based on the trajectory point sequence of each target object.

After the trajectory point sequence of each target object is determined, the corresponding historical trajectory information is determined based on the trajectory point sequence of each target object. For example, the historical trajectory information of a first target object is shown in FIG. 8.

After trajectory point sequences of the plurality of target objects driving on the current road segment at the current moment are determined, the historical trajectory information of the corresponding target objects is determined based on the trajectory point sequence of each target object. Subsequently, step S1607 is performed.

Step S1606. Obtain the pre-stored historical trajectory information of the plurality of target objects based on the current road segment.

When the quantity of the target objects driving on the current road segment at the current moment is not greater than the preset quantity threshold, it indicates that the target objects driving on the current road segment at the current moment are too few to be used as reference objects for determining the reference trajectory. In this case, pre-stored historical trajectory information of a plurality of target objects driving on the current road segment earlier may be obtained. The pre-stored historical trajectory information of the plurality of target objects may be stored in a server device shown in FIG. 2 or FIG. 3, or may be stored in a local data memory of the intelligent driving vehicle. This is not limited in the embodiments of this disclosure.

Step S1607. Determine the traffic-flow historical trajectory information based on the historical trajectory information of each target object.

The historical trajectory information of the various target objects forms the traffic-flow historical trajectory information of the current road segment at the current moment. The traffic-flow historical trajectory information includes the historical trajectory information of the plurality of target objects.

Step S1404. Determine a target driving trajectory based on the traffic-flow historical trajectory information and the current driving environment information.

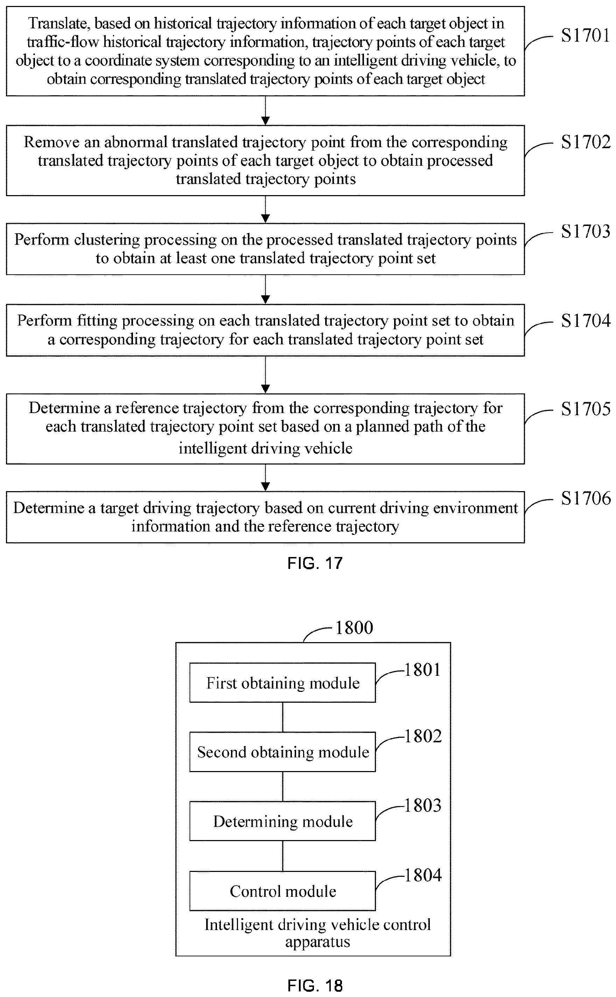

The target driving trajectory is planned for the intelligent driving vehicle based on the driving trajectory of each target object when passing through the current road segment and the current driving environment information collected in a real-time manner. In some embodiments, the target driving trajectory may be determined according to the following steps shown in FIG. 17.

Step S1701. Translate, based on the historical trajectory information of each target object in the traffic-flow historical trajectory information, trajectory points of each target object to a coordinate system corresponding to the intelligent driving vehicle, to obtain corresponding translated trajectory points of each target object.

A position of the intelligent driving vehicle when the driving mode is switched from the non-intersection mode to the intersection mode is determined, and the coordinate system corresponding to the intelligent driving vehicle is established at this position based on a center of a rear axle of the intelligent driving vehicle. An origin of the coordinate system may be a center point of the rear axle of the vehicle, a forward direction of the intelligent driving vehicle may be a positive direction of a Y-axis, and a direction perpendicular to the Y-axis to the right may be a positive direction of an X-axis. After the coordinate system corresponding to the intelligent driving vehicle is established, the trajectory points of each target object are translated in an X-axis direction. A translation length may be determined based on a width of the lane, and thetranslation direction is a direction facing towards the Y-axis.

Step S1702. Remove an abnormal translated trajectory point from the corresponding translated trajectory points of each target object to obtain processed translated trajectory points.

During movement of the target object, jumps would not occur to the position in a short period of time. Based on this, the translated trajectory points with obvious jumps relative to the preceding and/or succeeding translated trajectory points among the translated trajectory points of each target object may be determined. These translated trajectory points with obvious jumps are removed as abnormal translated trajectory points, and remaining translated trajectory points are used as the processed translated trajectory points.

Step S1703. Perform clustering processing on the processed translated trajectory points to obtain at least one translated trajectory point set.

At least one translated trajectory point set is obtained by clustering the remaining translated trajectory points after the abnormal translated trajectory points are preliminarily removed. A quantity of translated trajectory point sets is not greater than a quantity of final orientations of other vehicles on the current road segment.

Step S1704. Perform fitting processing on each translated trajectory point set to obtain a corresponding trajectory for each translated trajectory point set.

Fitting is performed based on the translated trajectory point sets, and each translated trajectory point set is fitted as a curved line or a straight line. The fitted curved line or straight line is the trajectory corresponding to each translated trajectory point sets.

Step S1705. Determine the reference trajectory from the corresponding trajectory for each translated trajectory point set based on a planned path of the intelligent driving vehicle.

The forward direction of the intelligent driving vehicle on the current road segment is determined based on the planned path of the intelligent driving vehicle. Based on this forward direction, a trajectory that matches a forward direction of the planned path is selected from the trajectories corresponding to the various translated trajectory point sets to serve as the reference trajectory.

Step S1706. Determine the target driving trajectory based on the current driving environment information and the reference trajectory.

After the reference trajectory is determined, the target driving trajectory of the intelligent driving vehicle is determined in combination with the current driving environment information. Subsequently step S1407 is performed.

Step S1405. Determine the valid lane line and driving information of other vehicles around based on the current driving environment information.

When the driving mode of the intelligent driving vehicle at the current moment is the non-intersection mode, it is considered that the intelligent driving vehicle can detect a lane line on the lane where the ego vehicle is located on the current road segment, and this lane line is used as the valid lane line. Moreover, the driving information of the other vehicles around is determined based on the current driving environment information.

Step S1406. Determine the target driving trajectory based on the valid lane line and the driving information.

The target driving trajectory of the intelligent driving vehicle is determined based on the detected valid lane line and the driving information of the other vehicles around. The implementation of determining the target driving trajectory based on the lane line is an existing technology, which is not described in the embodiments of this disclosure.

Step S1407. Control the intelligent driving vehicle to drive based on the target driving trajectory.

In the intelligent driving vehicle control method provided in the embodiments of this disclosure, the intersection mode and the non-intersection mode are set for the intelligent driving vehicle. When passing through an intersection section, the intelligent driving vehicle switches to the intersection mode for driving. When passing through a non-intersection section, the intelligent driving vehicle switches to the non-intersection mode for driving. In this method, the intelligent driving vehicle obtains the driving mode at the current moment of the ego vehicle and the current driving environment information. If the driving mode of the ego vehicle is the intersection mode, traffic-flow historical trajectory information of other vehicles in the intersection section that is currently driven is obtained. The target driving trajectory suitable for the ego vehicle is determined based on the traffic-flow historical trajectory information of the other vehicles and the current driving environment information. Finally, the ego vehicle is controlled to drive based on the target driving trajectory, so as to pass through the intersection that is currently driven. In this way, whether at regular or irregular intersections, and regardless of whether the ego vehicle is a first vehicle, the target driving trajectory suitable for the ego vehicle can be generated based on trajectories of other vehicles driving at this intersection section. Moreover, the vehicle can pass through the intersection correctly and quickly without relying on high-resolution images or increasing costs, thereby ensuring safe driving of the vehicle.

### Exemplary apparatus

FIG. 18 is a schematic diagram of a compositional structure of an intelligent driving vehicle control apparatus according to an exemplary embodiment of this disclosure. As shown in FIG. 18, an intelligent driving vehicle control apparatus 1800 may include:
a first obtaining module 1801, configured to obtain a driving mode of the intelligent driving vehicle at a current moment and current driving environment information;
a second obtaining module 1802, configured to obtain traffic-flow historical trajectory information corresponding to a current road segment on which the intelligent driving vehicle is driving in response to that the driving mode of the intelligent driving vehicle at the current moment is an intersection mode;
a determining module 1803, configured to determine a target driving trajectory based on the traffic-flow historical trajectory information and the current driving environment information; and
a control module 1804, configured to control the intelligent driving vehicle to drive based on the target driving trajectory.

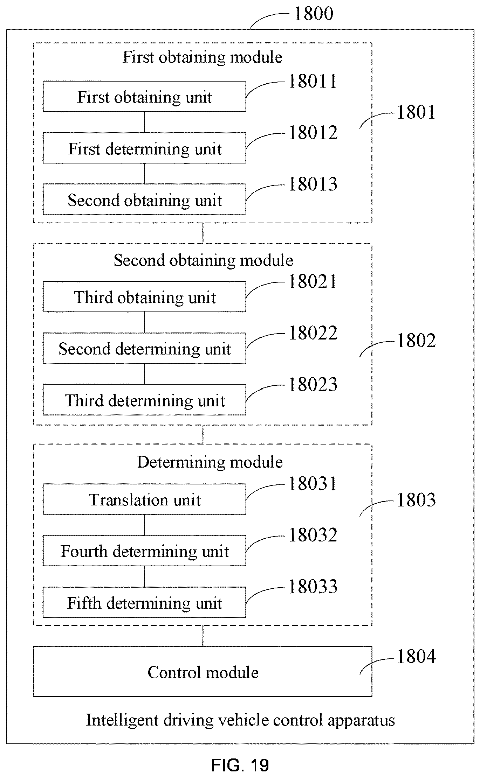

Referring to FIG. 19, in some embodiments, the first obtaining module 1801 may include:
a first obtaining unit 18011, configured to obtain a driving mode of the intelligent driving vehicle at a previous moment;
a first determining unit 18012, configured to determine the driving mode of the intelligent driving vehicle at the current moment according to the driving mode of the intelligent driving vehicle at the previous moment and the current driving environment information; and
a second obtaining unit 18013, configured to obtain the current driving environment information.

In some embodiments, the first determining unit 18012 may be specifically configured to:
determine current lane line information based on the current driving environment information; in response to that the driving mode of the intelligent driving vehicle at the previous moment is the intersection mode and the current lane line information includes a valid lane line, control the intelligent driving vehicle to exit the intersection mode, and determine the driving mode of the intelligent driving vehicle at the current moment as a non-intersection mode; and in response to that the driving mode of the intelligent driving vehicle at the previous moment is the intersection mode and the current lane line information does not include the valid lane line, determine the driving mode of the intelligent driving vehicle at the current moment as the intersection mode.

In some embodiments, the first determining unit 18012 may also be specifically configured to:
in response to that the driving mode of the intelligent driving vehicle at the previous moment is the non-intersection mode, determine a length of the valid lane line based on the current lane line information; in response to that the length of the valid lane line is less than a preset length threshold, determine stop line information and crosswalk line information based on the current driving environment information; in response to that the stop line information includes a stop line and/or the crosswalk line information includes a crosswalk line, control the intelligent driving vehicle to enter the intersection mode, and determine the driving mode of the intelligent driving vehicle at the current moment as the intersection mode; and in response to that the length of the valid lane line is greater than or equal to the preset length threshold, or the stop line information does not include the stop line and the crosswalk line information does not include the crosswalk line, determine the driving mode of the intelligent driving vehicle at the current moment as the non-intersection mode.

Referring to FIG. 19, in some embodiments, the second obtaining module 1802 may include:
a third obtaining unit 18021, configured to obtain, in response to that the driving mode of the intelligent driving vehicle at the current moment is the intersection mode, a plurality pieces of driving environment information collected during preset duration prior to the current moment of the intelligent driving vehicle;
a second determining unit 18022, configured to determine historical trajectory information of a plurality of target objects driving on the current road segment based on the plurality pieces of driving environment information; and
a third determining unit 18023, configured to determine the traffic-flow historical trajectory information based on the historical trajectory information of each target object.

In some embodiments, the second determining unit 18022 may be specifically configured to:
determine the plurality of target objects driving on the current road segment based on the plurality pieces of driving environment information; in response to that a quantity of the target objects is greater than a preset quantity threshold, determine a trajectory point sequence for each target object based on the plurality pieces of driving environment information; determine the historical trajectory information of each target object based on the trajectory point sequence of each target object; and in response to that the quantity of the target objects is less than or equal to the preset quantity threshold, obtain the pre-stored historical trajectory information of the plurality of target objects based on the current road segment.

Referring to FIG. 19, in some embodiments, the determining module 1803 may include:
a translation unit 18031, configured to translate, based on the historical trajectory information of each target object in the traffic-flow historical trajectory information, trajectory points of each target object to a coordinate system corresponding to the intelligent driving vehicle, to obtain corresponding translated trajectory points of each target object;
a fourth determining unit 18032, configured to determine a reference trajectory based on the corresponding translated trajectory points of each target object; and
a fifth determining unit 18033, configured to determine the target driving trajectory based on the current driving environment information and the reference trajectory.

In some embodiments, the fourth determining unit 18032 may be specifically configured to:
remove an abnormal translated trajectory point from the corresponding translated trajectory points of each target object to obtain processed translated trajectory points; cluster the processed translated trajectory points to obtain at least one translated trajectory point set; fit each translated trajectory point set to obtain a corresponding trajectory for each translated trajectory point set; and determine the reference trajectory from the corresponding trajectory for each translated trajectory point set based on a planned path of the intelligent driving vehicle.

For beneficial technical effects corresponding to the exemplary embodiments of this apparatus, reference may be made to the corresponding beneficial technical effects in the section of exemplary method described above, and details are not described herein again.

### Exemplary electronic device

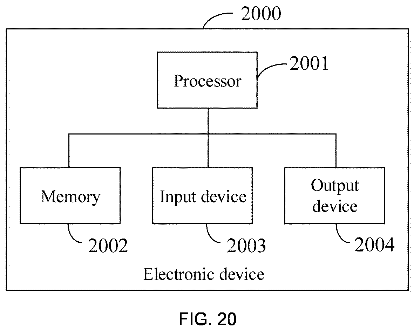

FIG. 20 is a schematic diagram of a composition structure of an electronic device according to an exemplary embodiment of this disclosure. As shown in FIG. 20, an electronic device 2000 includes at least one processor 2001 and a memory 2002.

The processor 2001 may be a central processing unit (CPU) or another form of processing unit having a data processing capability and/or an instruction execution capability, and may control other components in the electronic device 2000 to implement desired functions.

The memory 2002 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 2001 may execute the one or more program instructions to implement the intelligent driving vehicle control method according to the various embodiments of this disclosure that are described above and/or other desired functions.

In an example, the electronic device 2000 may further include an input device 2003 and an output device 2004. These components are connected to each other through a bus system and/or another form of connection mechanism (not shown).

The input device 2003 may further include, for example, a keyboard and a mouse.

The output device 2004 may output various information to the outside, and may include, for example, a display, a speaker, a printer, a communication network, and a remote output device connected to the communication network.

Certainly, for simplicity, FIG. 20 shows only some of components in the electronic device 2000 that are related to this disclosure, and components such as a bus and an input/output interface are omitted. In addition, according to specific application situations, the electronic device 2000 may further include any other appropriate components.

### Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the intelligent driving vehicle control method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the intelligent driving vehicle control method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. An intelligent driving vehicle control method, **characterized in that** the intelligent driving vehicle control method comprises:
obtaining (S401) a driving mode of the intelligent driving vehicle and current driving environment information at a current moment;
in response to that the driving mode of the intelligent driving vehicle at the current moment is an intersection mode, obtaining (S402) traffic-flow historical trajectory information corresponding to a current road segment on which the intelligent driving vehicle is driving;
determining (S403) a target driving trajectory based on the traffic-flow historical trajectory information and the current driving environment information; and
controlling (S404) the intelligent driving vehicle to drive based on the target driving trajectory.

2. The method according to claim 1, wherein the obtaining (S401) a driving mode of the intelligent driving vehicle at a current moment comprises:
obtaining (S4011) a driving mode of the intelligent driving vehicle at a previous moment; and
determining (S4012) the driving mode of the intelligent driving vehicle at the current moment based on the driving mode of the intelligent driving vehicle at the previous moment and the current driving environment information.

3. The method according to claim 2, wherein the determining (S4012) the driving mode of the intelligent driving vehicle at the current moment based on the driving mode of the intelligent driving vehicle at the previous moment and the current driving environment information comprises:
determining (S40121) current lane line information based on the current driving environment information;
in response to that the driving mode of the intelligent driving vehicle at the previous moment is the intersection mode and the current lane line information comprises a valid lane line, controlling (S40122) the intelligent driving vehicle to exit the intersection mode, and determining the driving mode of the intelligent driving vehicle at the current moment as a non-intersection mode; and
in response to that the driving mode of the intelligent driving vehicle at the previous moment is the intersection mode and the current lane line information does not comprise a valid lane line, determining (S40123) the driving mode of the intelligent driving vehicle at the current moment as the intersection mode.

4. The method according to claim 2, wherein the determining (S4012) the driving mode of the intelligent driving vehicle at the current moment based on the driving mode of the intelligent driving vehicle at the previous moment and the current driving environment information comprises:
determining (S40121) current lane line information based on the current driving environment information;
in response to that the driving mode of the intelligent driving vehicle at the previous moment is a non-intersection mode, determining (S40124) a length of a valid lane line based on the current lane line information;
in response to that the length of the valid lane line is less than a preset length threshold, determining (S40125) stop line information and crosswalk line information based on the current driving environment information;
in response to that the stop line information comprises a stop line and/or the crosswalk line information comprises a crosswalk line, controlling (S40126) the intelligent driving vehicle to enter the intersection mode, and determining the driving mode of the intelligent driving vehicle at the current moment as the intersection mode; and
in response to that the length of the valid lane line is greater than or equal to the preset length threshold, or the stop line information does not comprise the stop line and the crosswalk line information does not comprise the crosswalk line, determining (S40127) the driving mode of the intelligent driving vehicle at the current moment as the non-intersection mode.

5. The method according to claim 1, wherein the obtaining (S402) traffic-flow historical trajectory information corresponding to a current road segment on which the intelligent driving vehicle is driving comprises:
obtaining (S4021) a plurality pieces of driving environment information collected during preset duration prior to the current moment of the intelligent driving vehicle;
determining (S4022) historical trajectory information of a plurality of target objects driving on the current road segment based on the plurality pieces of driving environment information; and
determining (S4023) the traffic-flow historical trajectory information based on the historical trajectory information of each target object.

6. The method according to claim 5, wherein the determining (S4022) historical trajectory information of a plurality of target objects driving on the current road segment based on the plurality pieces of driving environment information comprises:
determining (S40221) the plurality of target objects driving on the current road segment based on the plurality pieces of driving environment information;
in response to that a quantity of the target objects is greater than a preset quantity threshold, determining (S40222) a trajectory point sequence for each target object based on the plurality pieces of driving environment information, and determining the historical trajectory information of each target object based on the trajectory point sequence of each target object; and
in response to that the quantity of the target objects is less than or equal to the preset quantity threshold, obtaining (S40223) the pre-stored historical trajectory information of the plurality of target objects based on the current road segment.

7. The method according to any one of claims 1 to 6, wherein the determining (S403) a target driving trajectory based on the traffic-flow historical trajectory information and the current driving environment information comprises:
translating (S4031), based on the historical trajectory information of each target object in the traffic-flow historical trajectory information, trajectory points of each target object to a coordinate system corresponding to the intelligent driving vehicle, to obtain corresponding translated trajectory points of each target object;
determining (S4032) a reference trajectory based on the corresponding translated trajectory points of each target object; and
determining (S4033) the target driving trajectory based on the current driving environment information and the reference trajectory.

8. The method according to claim 7, wherein the determining (S4032) a reference trajectory based on the corresponding translated trajectory points of each target object comprises:
removing (S40321) an abnormal translated trajectory point from the corresponding translated trajectory points of each target object to obtain processed translated trajectory points;
performing (S40322) clustering processing on the processed translated trajectory points to obtain at least one translated trajectory point set;
performing (S40323) fitting processing on each translated trajectory point set to obtain a corresponding trajectory for each translated trajectory point set; and
determining (S40324) the reference trajectory from the corresponding trajectory for each translated trajectory point set based on a planned path of the intelligent driving vehicle.

9. An intelligent driving vehicle control apparatus, **characterized in that** the intelligent driving vehicle control apparatus comprises:
a first obtaining module (1801), configured to obtain a driving mode of the intelligent driving vehicle and current driving environment information at a current moment;
a second obtaining module (1802), configured to obtain traffic-flow historical trajectory information corresponding to a current road segment on which the intelligent driving vehicle is driving in response to that the driving mode of the intelligent driving vehicle at the current moment is an intersection mode;
a determining module (1803), configured to determine a target driving trajectory based on the traffic-flow historical trajectory information and the current driving environment information; and
a control module (1804), configured to control the intelligent driving vehicle to drive based on the target driving trajectory.

10. The intelligent driving vehicle control apparatus according to claim 9, wherein the first obtaining module (1801) comprises:
a first obtaining unit (18011), configured to obtain a driving mode of the intelligent driving vehicle at a previous moment;
a first determining unit (18012), configured to determine the driving mode of the intelligent driving vehicle at the current moment according to the driving mode of the intelligent driving vehicle at the previous moment and the current driving environment information; and
a second obtaining unit (18013), configured to obtain the current driving environment information.

11. The intelligent driving vehicle control apparatus according to claim 10, wherein the first determining unit (18012) is further configured to:
determine current lane line information based on the current driving environment information; in response to that the driving mode of the intelligent driving vehicle at the previous moment is the intersection mode and the current lane line information includes a valid lane line, control the intelligent driving vehicle to exit the intersection mode, and determine the driving mode of the intelligent driving vehicle at the current moment as a non-intersection mode; and in response to that the driving mode of the intelligent driving vehicle at the previous moment is the intersection mode and the current lane line information does not include the valid lane line, determine the driving mode of the intelligent driving vehicle at the current moment as the intersection mode.

12. The intelligent driving vehicle control apparatus according to claim 9, wherein the second obtaining module (1802) comprises:
a third obtaining unit (18021), configured to obtain, in response to that the driving mode of the intelligent driving vehicle at the current moment is the intersection mode, a plurality pieces of driving environment information collected during preset duration prior to the current moment of the intelligent driving vehicle;
a second determining unit (18022), configured to determine historical trajectory information of a plurality of target objects driving on the current road segment based on the plurality pieces of driving environment information; and
a third determining unit (18023), configured to determine the traffic-flow historical trajectory information based on the historical trajectory information of each target object.

13. The intelligent driving vehicle control apparatus according to claim 9, wherein the determining module (1803) comprises:
a translation unit (18031), configured to translate, based on the historical trajectory information of each target object in the traffic-flow historical trajectory information, trajectory points of each target object to a coordinate system corresponding to the intelligent driving vehicle, to obtain corresponding translated trajectory points of each target object;
a fourth determining unit (18032), configured to determine a reference trajectory based on the corresponding translated trajectory points of each target object; and
a fifth determining unit (18033), configured to determine the target driving trajectory based on the current driving environment information and the reference trajectory.

14. A computer readable storage medium, storing a computer program, which, when executed by a processor, causes the processor to implement the intelligent driving vehicle control method, wherein the method according to any one of claims 1 to 8.

15. An electronic device (2000), **characterized in that** the electronic device comprises:
a processor (2001); and
a memory (2002), configured to store processor-executable instructions, wherein
the processor (2001) is configured to read the instructions from the memory (2002), and execute the instructions to implement the intelligent driving vehicle control method according to any one of claims 1 to 8.
